(19) **Europäisches Patentamt**

**European Patent Office**

**Office européen des brevets**

(11) **EP 1 460 773 A1**

(12) **DEMANDE DE BREVET EUROPEEN**

(43) Date de publication:
**22.09.2004 Bulletin 2004/39**

(51) Int Cl.⁷: **H04B 1/69**

(21) Numéro de dépôt: **04101036.4**

(22) Date de dépôt: **12.03.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL LT LV MK**

(30) Priorité: **18.03.2003 FR 0303304**

(71) Demandeur: **Thales**
**92200 Neuilly Sur Seine (FR)**

(72) Inventeurs:
- **HETHUIN, Serge**
  **94117 CX, ARCUEIL (FR)**
- **LEGRAND, Fabrice**
  **94117 CX, ARCUEIL (FR)**
- **LE MARTRET, Christophe**
  **94117 CX, ARCUEIL (FR)**

(74) Mandataire: **Dudouit, Isabelle**
**THALES Intellectual Property,**
**31-33 avenue Aristide Briand**
**94117 Arcueil Cedex (FR)**

(54) **Procédé et système de communication UWB**

(57) Procédé et système de communication dans un réseau supportant un protocole de transmissions par impulsions entre une station maître et une ou plusieurs stations utilisateurs. Le procédé ciomporte au moins les étapes suivantes :

- synchroniser la réponse impulsionnelle de la station maître reçue par les stations utilisateurs,
- acquérir les réponses impulsionnelles des stations utilisateurs reçues par la station maître,
- émettre des impulsions rapprochées de la station maître vers les différentes stations utilisateurs, et des différents utilisateurs vers la station maître.
- égaliser les impulsions à la réception pour chaque station utilisateur et pour la station maître.

Application à un réseau centralisé ou supportant une couche de transmission UWB.

| P1 | BCH | FCH | ACH | Voie descendante | CHAC | Tg | Voies montantes | RCH |
|---|---|---|---|---|---|---|---|---|

**FIG.3**

EP 1 460 773 A1

## Description

L'invention concerne notamment un procédé et un système de communication par exemple dans un réseau de communications supportant un protocole de type UWB et où les transmissions se font par impulsions.

Elle s'applique par exemple aux communications entre des terminaux mobiles et une station centrale, chargée de délivrer massivement des informations à destination de ces terminaux mobiles. Ce type de station est généralement appelée 'HOTSPOT' dans la littérature des télécommunications. Elle concerne principalement des applications 'grand public' comme les serveurs de données dans les aéroports, les gares ou les centres commerciaux mais peut également se déployer temporairement pour des équipes d'intervention (pompiers, médecins, forces spéciales, équipes de maintenance dans des zones à risques,..).

Elle s'applique dans des réseaux de communication utilisant un protocole de type TDMA (Time Division Multiple Access). Elle est aussi utilisée dans des applications qui reposent sur une trame composée partiellement d'une zone réservée pour les flux récurrents équivalente à du TDMA.

A titre d'exemple, une station HOTSPOT du type WIFI à base de 802.11 b permet de délivrer sur un canal, un débit radio de 11 Mb/s partagé entre tous les utilisateurs dans des applications essentiellement de transfert de données. Les caractéristiques en sont les suivantes :

- Une portée typique de l'ordre de quelques centaines de mètres en espace dégagé,
- Une bande de fréquences à 2.45 GHz,
- Un protocole d'accès en CSMA (Carrier Sense Multiple Access).

## Protocoles d'accès

Les deux protocoles d'accès les plus couramment utilisés dans les réseaux radio de faible ou moyenne étendue sont le CSMA/CA (Carrier Sense Multiple Access/Collision Avoidance) et le TDMA (Time Division Multiple Access). Chacun possède des avantages et des inconvénients qui les rend propres à des usages différents, principalement en termes de qualité de service et de topologie de réseau.

Le CSMA/CA est basé sur un accès aléatoire, donc non déterministe, qui le rend peu efficace pour les services nécessitant une qualité de service constante, en termes de régularité et de délai. Ce protocole présente notamment comme avantages d'offrir une égalité d'accès au support et une simplicité de mise en oeuvre. Par contre, ses performances sont moyennes en termes de débit à cause d'une part des intervalles de temps perdus entre les transmissions de trames et d'autre part des collisions. De plus, il n'est pas possible de garantir une qualité de service suffisante pour la voix ou pour la vidéo de par la nature variable et non bornée des délais de transmission.

Dans le cas du protocole TDMA de type centralisé, le temps est découpé régulièrement en trames de longueur fixe, elles-mêmes découpées en différentes zones à vocations diverses. Une station joue le rôle de coordinateur du réseau en attribuant les ressources de chaque trame aux différents utilisateurs en fonction de leurs besoins. On l'appelle la station centrale ou encore station 'maître'. Une station désirant émettre doit donc toujours faire une demande préalable à cette station maître, qui lui attribue ensuite une ressource temporelle proportionnelle à ses besoins, sous réserve de disponibilité suffisante.

Il n'y a donc pas de collisions à gérer dans un protocole TDMA, excepté pour le canal d'accès au réseau pour lequel il n'est pas possible de faire autrement, mais qui ne représente qu'une faible partie de la trame. De plus, il est possible avec ce système de transmettre des flux réguliers comme la voix ou la vidéo qui nécessitent un débit constant et un temps de latence faible. En revanche le trafic engendré par la signalisation peut être important.

## Réalisations UWB existantes

La couche physique du système de transmission proposé selon l'invention est notamment basée sur la technologie Ultra Large Bande connue sous la désignation anglo saxonne Ultra Wide Band. Le principe de l'UWB est de transmettre l'information au moyen d'impulsions très courtes (de l'ordre de la ns) en bande de base. Il s'ensuit alors deux propriétés caractéristiques de l'UWB qui sont :

1) une densité spectrale de puissance (DSP) ayant une très large bande (> 1 GHz) et ainsi un niveau maximum de DSP très faible, comparable au bruit. Le système possède ainsi une bonne immunité contre les brouilleurs, intentionnels ou non, du fait de sa largeur de bande, et ne perturbe pas les autres systèmes de transmission présents dans la bande passante du système proposé. Ceci conduit donc intrinsèquement à une faible probabilité d'interception et de détection (LPI/LPD).

2) l'absence de fréquence porteuse, ce qui permet de simplifier les traitements radio à la réception par rapport aux récepteurs conventionnels.

Les systèmes de transmission UWB (ou encore impulse Radio) ont été essentiellement décrits au niveau de la couche physique, référence [1] M. Z. Win and R. A. Scholtz, « Impulse radio: how it works », IEEE Com. Letters, vol. 2, no. 2, Feb. 1998, pp. 36-38. Cette couche physique inclut une technique d'accès multiple par répartition de codes utilisant des codes de "sauts temporels" (Time Hopping Codes) ou encore THCDMA.

L'idée est de transmettre les impulsions en les espaçant temporellement de manière pseudo-aléatoire, chaque utilisateur ayant sa propre séquence. Ceci permet en principe une utilisation de l'UWB dans un contexte multi-utilisateurs asynchrone particulièrement adapté aux réseaux ad-hoc. L'utilisation de cette couche physique à des systèmes pratiques est décrite dans les deux articles de :

*   M. Z. Win, X. Qiu, R. A. Scholtz, and V. O. K. Li, « ATM-based TH-SSMA network for multimedia PCS », IEEE JSAC, vol. 17, no 5, May 1999, pp. 824-836, et

*   S. S. Kolenchery, J. K. Townsend, and J. A. Freebersyser, « A novel impulse radio network for tactical military wireless communications », IEEE Milcom Conf., Bedford, MA, USA, Oct. 1998, pp. 59-65.

Ces documents décrivent la technique d'accès TH-CDMA sans détailler la couche MAC et la structure des trames correspondantes. De plus, l'écart entre deux impulsions successives étant réglé de manière à se prémunir contre les multi-trajets (typiquement 100 ns en Indoor) et un symbole devant être transmis sur plusieurs impulsions (intégration permettant d'augmenter le rapport signal/bruit), les débits maximum atteignables sont de l'ordre de quelques Mb/s seulement.

L'efficacité actuelle d'un protocole TDMA appliqué à l'UWB est moindre que celle obtenue avec des méthodes de transmission en bande étroite. La cause de ce faible rendement est d'une part la durée importante nécessaire à la synchronisation dans une transmission UWB, qui peut aller jusqu'à plusieurs millisecondes (dépendant de la longueur des codes d'acquisition et de la structure de réception) et d'autre part la non prise en compte de la spécificité de la forme d'onde par impulsions. En effet, le faible rapport cyclique des impulsions utilisées en UWB (de l'ordre de 1 %) fait que l'on peut tirer parti de larges plages de "silence". Or si l'on applique un TDMA classique pour séparer deux utilisateurs, c'est-à-dire en les faisant émettre l'un après l'autre, les temps inutilisés entre les impulsions d'un même utilisateur sont perdus. Cet intervalle de temps permet l'écoulement de la réponse impulsionnelle suite à l'émission d'une impulsion par une station quelconque.

Dans le procédé selon l'invention, par exemple, on rapproche au maximum les impulsions, émises par une même station usager ou par plusieurs stations différentes, dans les deux sens de la communication (de la station centrale vers les usagers et réciproquement). On applique pour cela une technique de synchronisation précise (objectif : 1 ns par exemple) dite fine des stations d'usagers suivie d'une technique d'égalisation du canal de transmission sur les impulsions à la réception, afin de combattre les interférences entre impulsions successives. D'autre part, dans le cas des réseaux centralisés de communications, le procédé peut effectuer un entrelacement complémentaire des trains d'impulsions soit des différents usagers à destination de la station centrale soit de la station centrale vers les usagers.

L'idée est notamment d'offrir un protocole TDMA optimisé pour la couche physique UWB, permettant d'atteindre des hauts débits tout en conservant une qualité de service constante.

Dans la suite de la description, les expressions « station centrale » et « station maître » désignent un élément semblable selon le type d'application.

L'invention concerne un procédé de communication dans un réseau supportant un protocole de transmissions par impulsions entre une station et une ou plusieurs stations utilisateurs caractérisé en ce qu'il comporte au moins les étapes suivantes :

*   synchroniser la réponse impulsionnelle de la station maître reçue par les stations utilisateurs,
*   acquérir les réponses impulsionnelles des stations utilisateurs reçues par la station maître,
*   émettre des impulsions rapprochées de la station maître vers les différentes stations utilisateurs, et des différents utilisateurs vers la station maître,
*   égaliser les impulsions à la réception pour chaque station utilisateur et pour la station maître.

Le procédé comporte par exemple une étape d'entrelacement des signaux échangés des stations utilisateurs vers la station maître et/ou une étape d'entrelacement des signaux échangés de la station maître vers les stations utilisateurs.

L'invention concerne aussi un système de communication dans un réseau supportant un protocole de transmissions par impulsions entre une station maître et une ou plusieurs stations utilisateurs. Il est caractérisé en ce que la station maître et les stations utilisateurs sont équipées de processeurs adaptés à

*   synchroniser la réponse impulsionnelle de la station maître reçue par les stations utilisateurs,
*   acquérir les réponses impulsionnelles des stations utilisateurs reçues par la station maître,
*   émettre des impulsions rapprochées de la station maître vers les différentes stations utilisateurs, et des différents utilisateurs vers la station maître,
*   égaliser les impulsions à la réception pour chaque station utilisateur et pour la station maître.

L'invention est par exemple utilisée dans un réseau centralisé ou dans un réseau supportant une couche de transmission UWB.

L'invention présente notamment les avantages suivants :

■   elle permet une capacité de transmission très importante, plusieurs dizaines de Mb/s, tout en assurant un maximum de discrétion et de protection contre les interférences ou les brouilleurs éventuels;

■ elle permet de fournir à la station centrale du dispositif la connaissance des distances des terminaux (stations d'usagers) qui lui sont raccordés, éventuellement des directions d'arrivée des signaux provenant de ces terminaux.

D'autres caractéristiques et avantages de l'objet de la présente invention apparaîtront mieux à la lecture de la description qui suit donnée à titre illustratif et nullement limitatif et des figures annexées qui représentent :

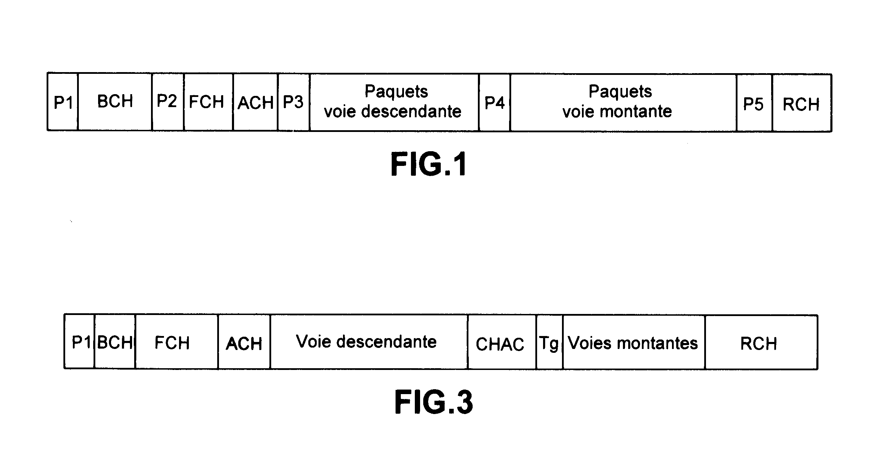

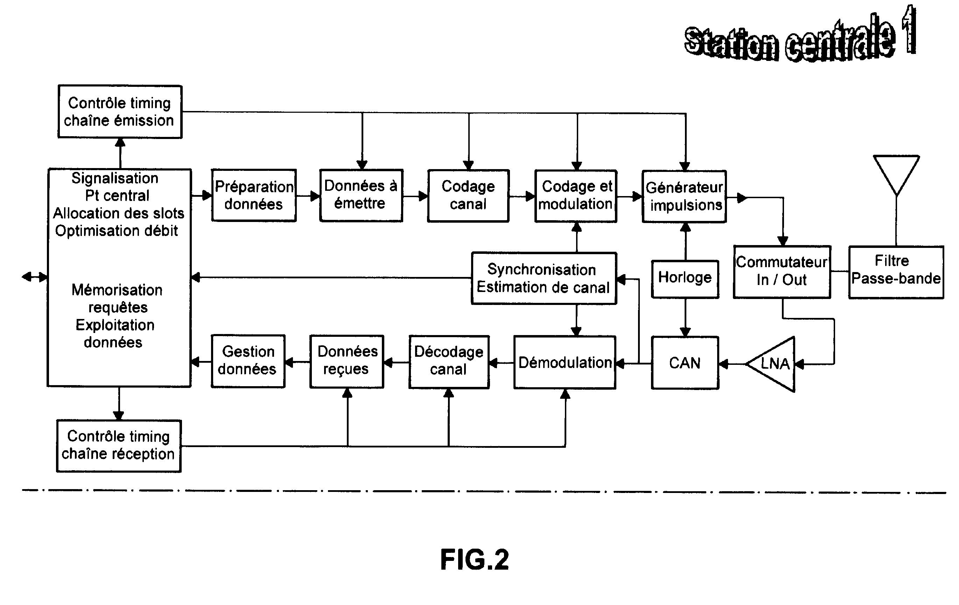

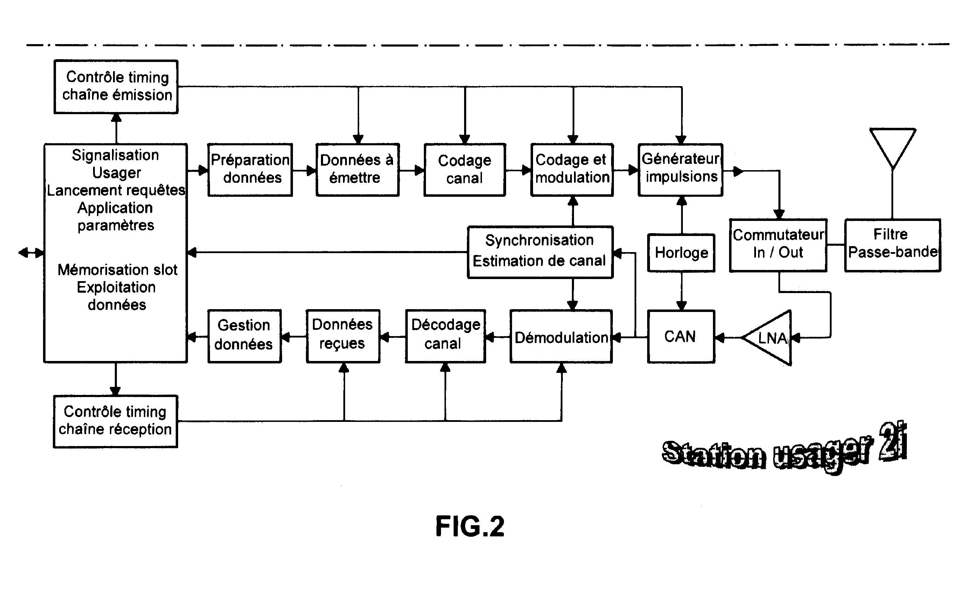

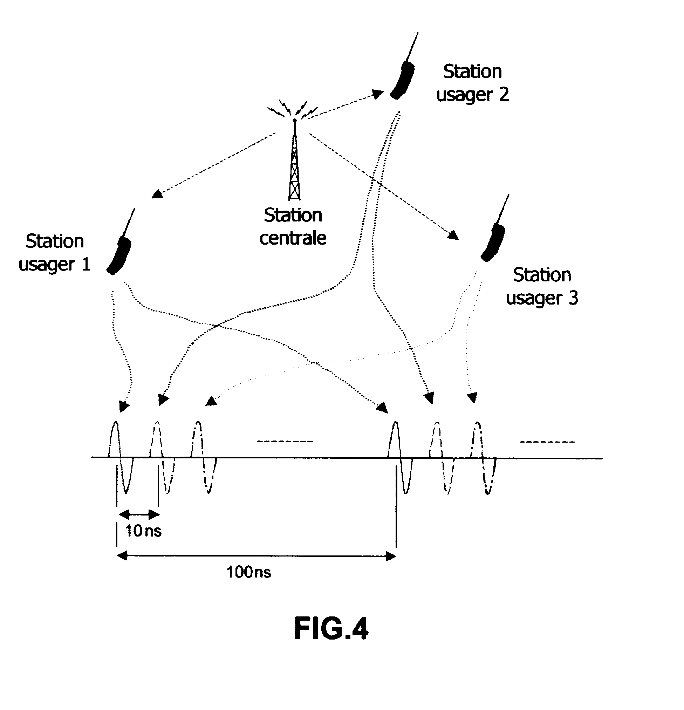

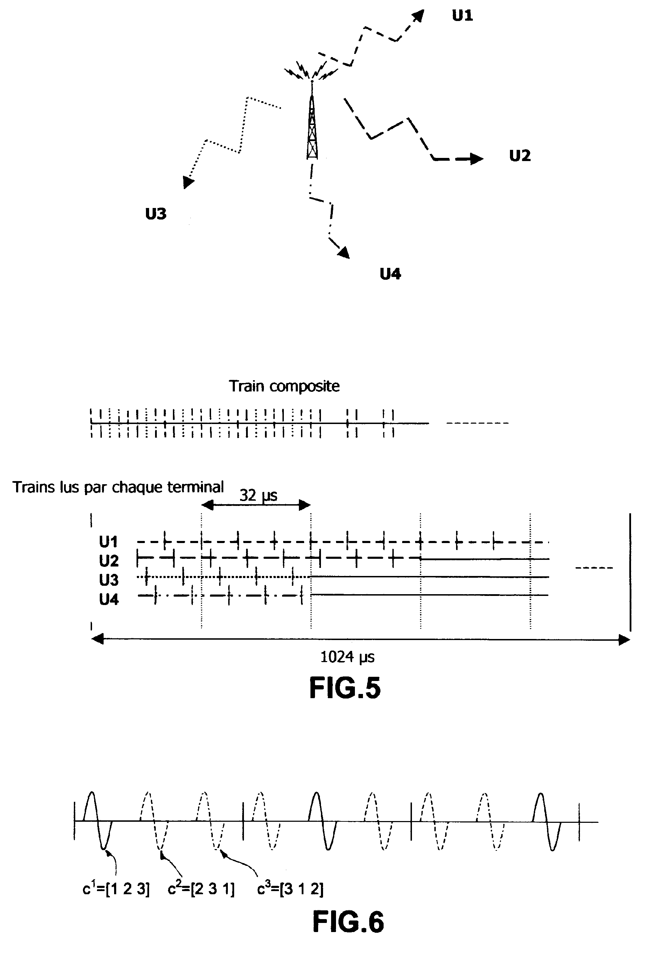

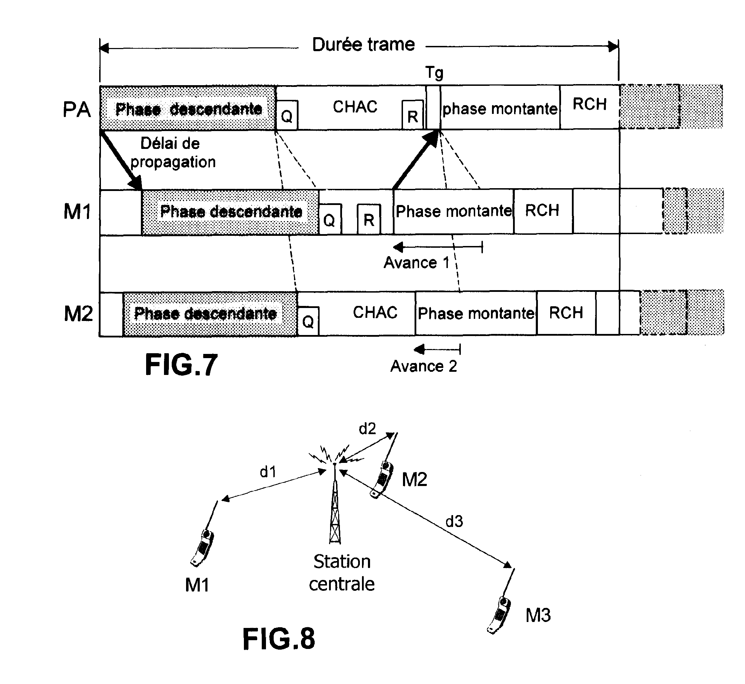

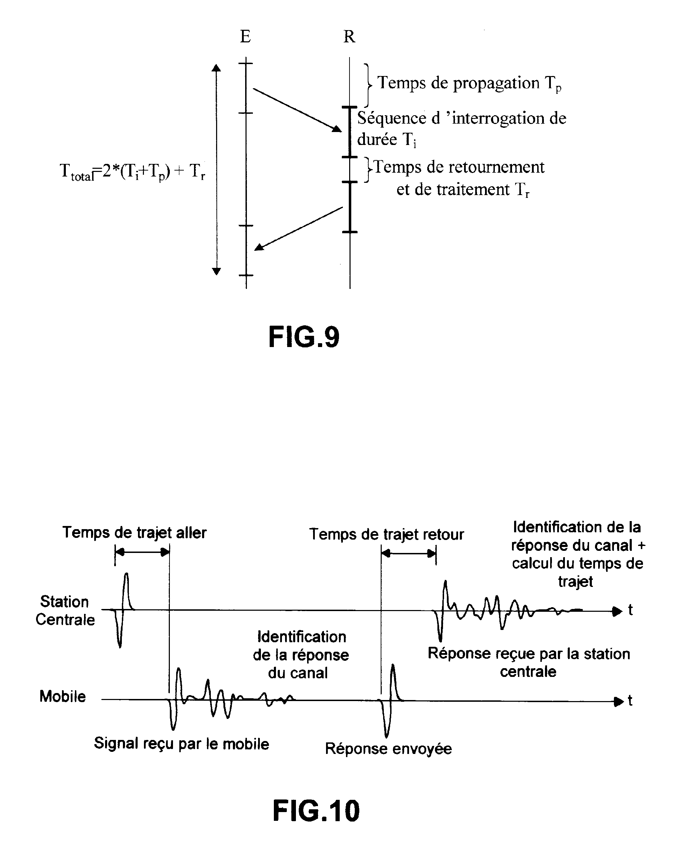

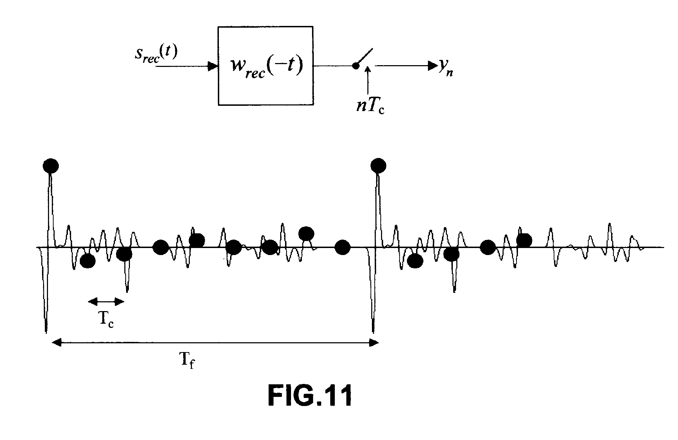

■ La figure 1 l'organisation classique d'une trame dans un réseau radio à accès TDMA,
■ La figure 2 un exemple d'architecture de système selon l'invention,
■ La figure 3 un exemple de trame pour un mode de partage temporel selon l'invention,
■ La figure 4 un exemple d'agencement temporel des impulsions en voie descendante conformément au dispositif selon l'invention,
■ La figure 5 un exemple de train composite d'impulsions en voie descendante conformément au dispositif selon l'invention,
■ La figure 6 un exemple de code linéaire utilisable dans le sens descendant,
■ La figure 7 un exemple de chronogramme simplifié avec deux stations usagers et la station maître conformément à la trame présentée selon l'invention,
■ La figure 8 un exemple de principe de mesure de distance entre la station maître et les stations usagers,
■ La figure 9 le principe d'une procédure dite de "calibration" en phase CHAC,
■ La figure 10 un exemple de principe de mesure de distance couplée à l'identification du canal,
■ La figure 11 un exemple de principe de filtrage et d'échantillonnage à l'entrée du récepteur.

Afin de mieux faire comprendre l'objet de l'invention, l'exemple qui suit donné à titre illustratif et nullement limitatif concerne un réseau centralisé de communications supportant un protocole de type UWB et où les transmissions se font par impulsions. Pour un réseau centralisé, on utilise l'expression « station centrale » pour désigner la « station maître ».

En résumé, l'idée de l'invention consiste notamment à utiliser l'espace laissé vacant entre les impulsions émises par une station usager ou par plusieurs stations usagers, à s'affranchir des interférences mutuelles dues au rapprochement des impulsions (du fait de l'utilisation de l'espace libre), à assurer l'absence de chevauchement des impulsions des diférents utilisateurs grâce aux moyens suivants :

❖ Tout d'abord une procédure de synchronisation temporelle,

❖ Le couplage de cette procédure de synchronisation temporelle à une procédure de détermination de la réponse impulsionnelle du canal de transmission,

❖ Une phase d'égalisation ayant notamment pour but de corriger :

• les réponses enchevêtrées du train d'impulsions très rapprochées émises soit par une station usager, soit par la station centrale (station maître),
• les réponses enchevêtrées des trains d'impulsions entrelacées émis soit par des stations usager différentes en direction de la station centrale, soit par la station centrale en direction des stations usagers.

Cette phase d'égalisation peut être effectuée, par exemple, en utilisant l'inverse des réponses impulsionnelles des différents émetteurs.

Pour rappel, la figure 1 schématise une trame selon l'art antérieur dans un réseau radio à accès TDMA.

Cette trame comporte plusieurs préambules qui sont des temps de garde, sans émission, permettant aux différents noeuds du réseau, d'une part de préparer leur configuration matérielle et d'autre part de se synchroniser pour la phase suivante de la trame. On trouve ainsi :

■ P1, avant l'émission en diffusion de la station centrale,
■ P2, avant l'allocation des ressources,
■ P3, avant les liaisons descendantes de la station centrale vers les stations usagers (terminaux) tour à tour,
■ P4, avant de passer en mode liaisons montantes,
■ P5, avant de démarrer la phase de réservation.

La signalisation de cette trame comporte les parties suivantes :

■ BCH (Broadcast CHannel); partie de diffusion de données servant à délivrer des informations communes à l'ensemble des stations usagers situées dans la portée radio de la station centrale,
■ FCH (Frame CHannel); partie envoyée par la station maître, qui sert à indiquer les zones de transmission dans la trame courante qui sont allouées aux différents usagers pour recevoir ou transmettre des données,
■ ACH (Access feedback CHannel); partie servant à la station maître pour indiquer à certains usagers désirant transmettre de l'information que leur requête (émise dans la phase RCH de la trame précédente) est bien prise en compte et sera effective dans un délai très court,

■ RCH (Random access CHannel); partie accessible aux usagers désirant envoyer ou recevoir de l'information, leur permettant de faire connaître leur demande auprès de la station centrale.

L'envoi des données dans le sens liaison montante et dans le sens liaison descendante s'effectue de la manière suivante :

■ Voie descendante (Echanges de la station centrale vers les stations usagers (terminaux)) : paquets de données de longueur définie envoyés individuellement par la station centrale vers les différents usagers, tour à tour,
■ Voie montante (Echanges des stations usagers (terminaux) vers la station centrale) : paquets de données de longueur définie envoyés par les usagers admis à émettre aux endroits alloués dans la trame par la station maître.

Le procédé et le dispositif de communication selon l'invention reposent par exemple sur les éléments suivants : l'utilisation d'une technique d'accès à répartition dans le temps (de type TDMA par exemple) combinée à un mode de duplexage temporel (TDD Time Division Duplexing), incluant :

• une phase spécifique relative à l'acquisition du canal de transmission pour l'égalisation,
• une technique d'égalisation des impulsions à la réception permettant l'émission des impulsions plus rapidement ou l'entrelacement de trains de différents usagers ; ceci permettant notamment d'augmenter le débit à nombre d'utilisateurs constant ou d'augmenter le nombre d'utilisateurs à débit constant,
• une procédure de mesure de la distance entre le point d'accès et le mobile.

Un réseau de communications centralisé selon l'invention à accès de type UWB, plus généralement avec des transmissions par impulsions, est schématisé sur la figure 2. Il comporte par exemple une station centrale 1 ou station maître et différentes stations d'usagers 2i (une seule station est représentée pour des raisons de simplificité). Les transmissions s'effectuent en voie montante ou en voie descendante. La station centrale et les stations usagers sont pourvues de processeurs adaptés à mettre en oeuvre une technique d'égalisation.
La station centrale est équipée d'un processeur adapté à donner la répartition des utilisateurs du réseau (par exemple leur position, etc.;), à attribuer les ressources temporelles du TDMA, le décalage temporel à appliquer dans le sens montant (ce qui correspond à la synchronisation entre les dfférents utilisateurs) et éventuellement le facteur d'intégration (nombre d'impulsions par bit) à utiliser pour chaque station.
Les échanges entre la station centrale et une station usager du réseau utilisent des trames dont un exemple de structure est donné à la figure 3. Par rapport à la trame décrite à la figure 1, la trame adaptée selon l'invention comporte, par exemple, une phase CHAC (CHannel ACquisition) qui a notamment pour fonction de déterminer :

■ la réponse impulsionnelle reçue par la station centrale suite à l'émission d'une station usager donnée,
■ le temps de transit des signaux entre une station usager donnée et la station centrale (donc la distance entre la station centrale et la station usager concernée),
■ la réponse impulsionnelle reçue par chaque station usager provenant de la station centrale.

Dans l'exemple développé ci-après on considère pour simplifier que l'on utilise une modulation binaire, c'est-à-dire qu'un symbole (suite d'impulsions) transporte un bit d'information. Cette modulation binaire peut être classiquement une modulation de position PPM (Pulse Position Modulation) ou de polarité (bipolaire).
Néanmoins dans le cas général des modulations d'ordre plus élevé (2,3,4... bits par symbole) sont possibles, ce qui peut permettre d'augmenter encore le débit. Parmi ces modulations on peut citer les modulations d'amplitudes (PAM) ou les modulations de position m-PPM (m=4 ou plus) ainsi que leurs combinaisons.
La structure de cette trame de durée 2180 ms est par exemple la suivante :

**Phases d'émission de la station centrale (station maître) vers les stations usagers**

■ P1 : durée 20 μs - Préambule long pour la synchronisation et la "calibration" de la réponse impulsionnelle de la station centrale reçue par les stations usagers suivie d'un court temps de garde.
Emission d'une impulsion toutes les 250 ns, total de 64 impulsions (16 μs), puis temps de garde de 4 μs pour mise à jour des égaliseurs dans les stations usagers.

■ BCH : durée 16 μs
Emission au rythme d'une impulsion toutes les 10 ns (possible puisque les stations usagers ont, dans la phase précédente P1, acquis la réponse impulsionnelle de la station centrale et peuvent désormais égaliser)
Au total 1600 impulsions :

→ Soit 200 octets si 1 impulsion/symbole (100 Mb/s instantané pendant 16 μs) réservés pour les portées faibles (quelques mètres)
→ Soit encore 25 octets si 8 impulsions/symbole (12.5 Mb/s instantané pendant 16 µs), pour les portées plus grandes.

■ FCH : durée 32 µs
Emission au rythme d'une impulsion toutes les 10 ns,
Au total 3200 impulsions

→ Soit 400 octets si 1 impulsion/symbole
→ Ou 50 octets si 8 impulsion/symbole.

■ ACH : durée 16 µs
Au total 1600 impulsions émises au rythme de 10 ns soit 200 octets si 1 impulsion/symbole soit encore 25 octets si 8 impulsions/symbole.

Donc une durée totale de la phase d'émission de 84 µs.

**Phase de voie descendante**

Durée totale de la phase : **1024 µs**

Les impulsions sont émises par la station centrale (station maître) avec un espacement minimum de 10 ns (100 Mb/s instantané si un symbole par impulsion) et ces impulsions sont éventuellement entrelacées par exemple de telle sorte qu'un utilisateur reçoit une impulsion le concernant toutes les 100 ns comme il est représenté à la figure 4.

A titre d'exemple, avec les paramètres d'espacement de 10 ns et de récurrence à 100 ns, il est possible d'entrelacer 10 utilisateurs au maximum. Cependant, le nombre total de stations usagers peut être plus important car la phase est découpée en 32 tranches de 32 µs. La station centrale attribue N (entre 1 et 32) 'slots' à chaque station usager et un temps de décalage par rapport au début de la phase de Voie descendante :

$$Ti = ni*32 \ \mu s + ki*10 \ ns$$

Avec $0 \leq ni \leq 31$: numéro du bloc autorisé
Et $0 \leq ki \leq 9$ : calage temporel de la lecture pour un terminal par rapport au début du bloc.

Etant donné que ce protocole permet à la station centrale d'avoir connaissance des distances des différentes stations usagers (grâce à la procédure CHAC décrite par la suite), celle-ci peut également adapter le nombre d'impulsions par symbole (comme il a été indiqué pour la phase FCH). Pour une station proche, le facteur d'intégration sera plus faible que pour une station éloignée. Le facteur d'intégration correspond à la longueur du code donc au nombre d'impulsions pour transmettre un symbole élémentaire, ex. 1024 impulsions au lieu de 16 impulsions par symbole réduisent le débit par 1024/16=64.

L'exemple donné à la figure 5 représente un entrelacement simultané de 4 utilisateurs U1, U2, U3 et U4 et de 3 impulsions par slot seulement. Sur cette figure les utilisateurs sont différenciés par des traits plus ou moins continus. Les impulsions entrelacées sont séparées sur des axes différents pour une meilleure compréhension. De plus, les trajets multiples ne figurent pas, pour une visualisation plus aisée.

Une autre possibilité consiste à multiplexer les différents utilisateurs par des codes orthogonaux dits THC (pour Time Hopping Code) tout en séparant au minimum deux impulsions successives de 10 ns.

La figure 6 montre un exemple de code de sauts temporels linéaire de longueur 3 avec 3 utilisateurs dans le sens descendant. Il est possible d'utiliser un code catastrophique (c'est-à-dire qui ne comporte pas de bonnes propriétés de corrélation) car il n'y a pas de problème de synchronisation, ces impulsions sont émises par un seul utilisateur (la station centrale ou station maître).

Il est aussi possible de superposer un code de sauts temporels pseudo-aléatoires THC avec de bonnes propriétés de corrélation pour pouvoir séparer plusieurs canaux sur une même station de base, ou encore un code PN (abréviation de Pseudo Noise) si on utilise une modulation autre que PPM (abréviation de Pulse Position Modulation) comme la modulation bipolaire, ce qui revient à faire du CDMA (Code Division Multiple Access) entre les canaux de la station centrale. En outre, l'utilisation d'un code THC permet également de lisser le spectre pour éliminer les raies spectrales espacées de 100 MHz pour des impulsions espacées de 10 ns, et plus généralement d'éliminer les raies espacées de 1/T si T est l'espacement temporel entre les impulsions.

Une autre manière de procéder consiste à utiliser un TDMA simple avec des impulsions très rapprochées, comme dans la phase de Broadcast (diffusion en français). Cela oblige les récepteurs des stations usagers à travailler à plein régime mais la gestion est plus simple. Il est aussi possible de superposer un code pseudo-aléatoire pour lisser le spectre ou séparer les canaux (si il y en a plusieurs) de la station centrale.

Une variante de réalisation concernant plus particulièrement le fonctionnement en voie descendante consiste à inclure un dispositif de type canal de référence ayant notamment pour fonction de maintenir la synchronisation des stations usagers mobiles ou inactives. Par exemple, sur les 10 trains d'impulsions entrelacées simultanément, il est possible de réserver le premier train à cet effet et ne pas transmettre d'informations sur cette voie. Ainsi lorsqu'une station usager ne reçoit pas des données le concernant de la part de la station centrale, il se cale sur ce train d'impulsions de référence et conserve ainsi la synchronisation avec la station centrale.

Cette variante présente notamment les avantages suivants :

1 - les stations usagers ne recevant pas de données les concernant dès le début de la voie descendante restent synchronisées sur la station centrale et sont prêtes à recevoir leurs données à n'importe quel moment de cette phase. De même celles qui ont reçu des données en début de phase restent synchronisées durant toute la phase jusqu'au début de la phase suivante, ce qui évite à leur oscillateur de dériver trop fortement en temps.

2 - Le train d'impulsions de référence est également utile au suivi de réponse du canal de propagation entre le point d'accès et les mobiles, si une égalisation adaptative est utilisée.

**Phase acquisition CHAC**

Dans l'exemple présenté ci-dessus cette phase a une durée de 40 μs. Cette phase a notamment pour fonction d'effectuer :

■  Une « calibration » pour déterminer le temps de transit entre une station usager et la station centrale (phase au cours de laquelle, on détermine la position d'un usager par rapport à la station maître)
■  L'estimation des paramètres du canal utilisés pour l'égalisation entre la station usager concernée et la station centrale.

La station centrale (station maître) envoie une séquence connue vers le destinataire désigné dans la phase RCH afin de lui transmettre des données dans les trames suivantes, ou encore dans la phase FCH pour réactualiser la 'calibration' par exemple dans le cas d'un changement important dans la réponse impulsionnelle du canal, pour des raisons de mobilité de la station usager. La station usager destinataire se synchronise sur les impulsions reçues et les retourne immédiatement ou avec un temps de retard connu et constant à la station maître. Cela signifie que le temps séparant l'émission de la réception de la réponse est égal au temps de trajet aller + le temps de transit connu et constant dans la station usager destinataire + le temps de trajet retour (égal en principe au trajet aller).

La mesure de distance entre une station usager et la station centrale est effectuée par exemple par cette dernière sur réception de la séquence retournée par le terminal concerné et en mettant en oeuvre une méthode connue de l'Homme du métier.

Même dans le cas où il n'y a pas de station utilisateur à « calibrer », la station centrale peut envoyer la séquence pour entretenir la synchronisation.

La séquence transmise par la station maître est par exemple composée de 64 impulsions espacées de 250 ns soit 16 μs, à laquelle il faut rajouter le temps de retour (4 μs) et le temps maximum de trajet Aller/ Retour (12 μs) : 32 μs pour obtenir la longueur de la séquence.

Le nombre d'impulsions permet d'avoir un gain suffisamment important pour que les stations les plus éloignées puissent détecter le signal et se synchroniser correctement. Ce gain peut aller jusqu'à environ 18 dB, si l'on utilise une seule séquence de longueur 64, moins si l'on répète plusieurs fois une séquence plus courte. Ce choix est un compromis entre facilité de détection et portée. Il dépend de la performance des récepteurs concernant la synchronisation : un récepteur possédant un nombre élevé de corrélateurs travaillant en parallèle peut se synchroniser directement sur une séquence, alors qu'un autre récepteur moins performant aura besoin de plusieurs répétitions de la séquence pour arriver au même résultat. Ce nombre de 64 laisse le champ libre à plusieurs configurations possibles : une seule séquence de longueur 64 (gain de 18 dB), une sous-séquence de longueur 16 répétée 4 fois (gain de 12 dB), etc.

Dans le cas d'une répétition multiple d'une sous-séquence, la trame comporte un indicateur de fin de séquence pour que le récepteur se repère. Ceci peut être réalisé en inversant la polarité de la dernière sous-séquence.

**Temps de garde**

Tg : 8 μs

La valeur du temps de garde est choisie pour compenser l'avance maximale qu'une station usager doit appliquer à ses transmissions vers la station centrale. Par exemple on peut commencer à transmettre « plus tôt» que prévu : normalement chaque station devrait attendre 8μs après la fin de la phase précédente avant de transmettre, mais comme elles ne sont pas toutes à la même distance de la station centrale elle doivent compenser le retard introduit par la propagation en avançant chacune leur transmission d'une valeur proportionnelle à leur distance ; cette avance temporelle est basée sur la mesure de temps de propagation faite dans la phase CHAC. D'après l'exemple donné, ce temps de garde correspond à 5 μs d'après les hypothèses émises précédemment sur la distance maxi d'une station.

**Phase de transmission voies montantes**

Durée : 768 μs (24*32 μs)

L'exemple donné correspond à deux variantes de réalisation :

**Solution avec entrelacement des usagers**

La synchronisation des stations usagers est obtenue juste avant la phase de calibration CHAC. Une station usager utilise la séquence d'interrogation envoyée par la station centrale pour l'étape de « calibration » comme référence de temps pour les transmissions montantes. Les terminaux transmettent les impulsions avec une avance qui leur a été communiquée par la station centrale lors de l'allocation de ressources FCH.

L'entrelacement s'effectue, par exemple sur 10 utilisateurs, avec attribution d'un certain nombre de tranches de 32 μs à chaque utilisateur (avec une impulsion toutes les 100 ns par utilisateur), une tranche représente 40 bits si l'on intègre 8 impulsions par symbole, une tranche représente 320 bits sans intégration, c'est-à-dire, un symbole (donc un bit car on a supposé une modulation binaire) étant représenté par une seule impulsion.

Cette manière de procéder présente comme avantage d'assurer la discrétion des transmissions. L'émission pour chaque mobile est plus facile, les impulsions sont en effet écartées de 100 ns au lieu de 10.

**Solution avec TDMA sans entrelacement**

Dans cette variante de réalisation, les impulsions sont transmises d'un terminal vers la station centrale sans entrelacement c'est à dire toutes les 10 ns (soit le maximum).

**Phase d'accès aléatoire RCH**

RCH : durée 4 blocs de 64 μs (256 μs)

Dans cette phase de RCH, les stations usagers qui désirent communiquer avec la station centrale, envoient un message comportant les caractéristiques suivantes :

■ Une récurrence entre les impulsions (ex. 250 ns) (temps séparant des impulsions successives d'un même émetteur),
■ Une valeur d'intégration Ni (nombre d'impulsions à intégrer pour trouver un symbole),
■ Un nombre N de bits à transmettre : dans l'hypothèse de groupes d'intervention, le nombre de terminaux est limité,
■ Un préambule de 12 μs permettant à la station centrale de se synchroniser sur le nouveau terminal.

Ces paramètres sont identiques ou sensiblement identiques à toutes les stations usagers et connues de la station centrale.
Ainsi, le message de requête avec Ni=16, N= 12 et une récurrence de 250 ns, comporte 192 impulsions et dure 48 μs. Il est précédé d'un temps de garde de 4 μs puis d'un préambule de synchro de 12 μs, ce qui correspond à un bloc de 64 μs.
La phase RCH est par exemple composée de 4 blocs de 64 μs et chaque station usager qui désire communiquer choisit selon un algorithme à tirage pseudo-aléatoire, par exemple, l'un des 4 emplacements de blocs pour lui transmettre son message. Si l'émission dans cette phase RCH se fait sans collision, la station centrale indique dans la trame suivante la bonne réception de l'identité du demandeur. Sans réponse, la station usager concernée réitère sa demande dans la trame suivante.

Afin de mieux expliciter le fonctionnement du système selon l'invention, la figure 7 présente un exemple de déroulement d'une trame simplifiée dans un réseau constitué d'une station centrale et de deux stations mobiles M1 et M2 (utilisateurs). M2 est le plus proche de la station centrale PA, la phase dite de « calibration » temporelle et d'acquisition de la réponse du canal (représentée sur la figure 7 par les lettres Q : question, R : réponse) est appliquée pour le mobile M1 par exemple. Pour des raisons de clarté, le préambule P1 ne figure pas et tous les canaux diffusés par la station centrale vers les stations mobiles sont regroupés sous le terme « phase descendante ». De plus, la représentation de la durée de la phase CHAC a été exagérée, sa durée réelle est beaucoup plus courte. Enfin, on considère que M1 et M2 sont passés au moins une fois déjà par la phase CHAC et qu'ils connaissent tous les deux « l'avance » temporelle à appliquer à leur transmission en phase montante.

Les avances respectivement t1, t2 des stations mobiles M1, M2 sont variables en fonction de leur distance à la station centrale. Elles sont égales par exemple au double du temps de propagation entre la station mobile considérée et la station centrale. Ce temps t1, t2 est mis à jour par la station centrale après le passage de la station mobile par la phase CHAC. Il permet à M1 et M2 d'être correctement décalés temporellement dans la phase montante afin que leurs impulsions soient parfaitement entrelacées lorsqu'elles arrivent à la station centrale.
Les mesures de temps de transit se font par exemple avec une précision de 1 ns, ce qui permet d'entrelacer avec suffisamment de précision des impulsions d'origines diverses toutes les 10 ns.

**Phase dite de « calibrage » temporel et de la mesure de distance**

La figure 8 représente un exemple de mesure dite de « calibrage » temporel entre la station centrale et chacune des stations mobiles, à partir de la mesure de distance couplée à l'acquisition de la réponse du canal.

Durant la phase dite de « calibration », la station centrale PA interroge les trois stations mobiles M1, M2 et M3 à tour de rôle. Cette procédure a notamment pour objectifs :

Pour la station centrale :

■ De mesurer précisément la distance à laquelle est située la station mobile, basée par exemple sur la mesure du temps de propagation du signal, afin de lui fournir une indication de décalage temporel ou avance à appliquer dans le sens montant,

■ D'acquérir la réponse du canal de transmission entre la station mobile et la station centrale, basée sur l'analyse de la réponse du mobile concerné.

Pour la station mobile

■ D'acquérir ou de mettre à jour la réponse du canal de transmission entre la station centrale et elle-même, par exemple par mesure périodique dans la phase CHAC.

La figure 9 représente schématiquement le déroulement de la procédure, E représente l'émetteur de la requête (station centrale), R le récepteur ou mobile interrogé.

L'émetteur E émet une séquence d'interrogation de durée Ti, Tp représente le temps de propagation de cette requête vers le récepteur R et Tr le temps de retournement et de traitement de la requête par le récepteur. Ainsi, le temps nécessaire pour le traitement complet de la procédure aller-retour est égal au temps de propagation aller-retour plus le temps de retournement à l'intérieur du mobile plus la longueur des séquences émises d'une part par la station centrale, d'autre part par la station mobile, (le temps de retournement correspond au temps dans la station interrogée entre la réception du signal et la réémission du signal de réponse, classique dans tous les équipements du type transpondeur).

La figure 10 représente dans un diagramme temporel les éléments caractéristiques suite à la transmission d'une information d'une impulsion. Par rapport aux annotations de la figure 9, on a les correspondances suivantes :

• Temps de trajet aller = temps de propagation de la requête,
• Identification de la réponse du canal = correspond au temps de traitement,
• Temps de trajet retour = temps de propagation du retour de la réponse vers l'interrogateur,
• Réponse reçue par le point d'accès = temps d'arrivée de la réponse,

Cette procédure est réalisée impulsion par impulsion ou série d'impulsions par séries d'impulsions. Le point d'accès émet sa série d'impulsions, le mobile attend la série complète et émet alors la sienne en retour.

**Phase d'égalisation**

Le procédé selon l'invention comporte une phase d'égalisation des signaux reçus par le récepteur de la station centrale et des terminaux usagers comportant par exemple les deux phases suivantes :

1) une phase d'estimation des paramètres du canal,
2) une phase d'égalisation/démodulation utilisant les paramètres estimés à la phase 1.

L'égalisation de la liaison montante et l'égalisation de la liaison desendante sont différentes.
L'exemple qui suit est donné pour une modulation d'amplitude à 2 états.
La figure 11 schématise le principe du filtrage et d'échantillonnage à l'entrée du récepteur. La structure du récepteur permettant de réaliser l'égalisation du canal de propagation voie montante et voie descendante comporte par exemple un filtre adapté à l'onde reçue wrec(t) suivie d'un échantillonneur au rythme « chip » Tc, c'est-à-dire à la cadence des impulsions entrelacées.

**Estimation des paramètres du canal**

L'estimation des paramètres du canal se fait dans un contexte par apprentissage dans lequel une suite de symboles connus des récepteurs est émise. Une station (centrale ou utilisateur) envoie une séquence connue de $N$ symboles $\mathbf{s}_{ref} = [s_{ref}(1), .... s_{ref}(N)]^T$ et le signal reçu par la station destinataire (utilisateur ou maître respectivement) après échantillonnage s'exprime comme :

$$y = HCs_{ref}$$

avec $\mathbf{y} = [y(1),..., y(M)]^T$ où $\mathbf{C}$ est la matrice de codage du code d'étalement (utilisé au niveau du code d'étalement temporel utilisé pour les différents utilisateurs) temporel et $\mathbf{H}$ est la matrice (inconnue) composée des valeurs de la réponse impulsionnelle $h(t)$ du canal, échantillonnée au rythme $T_c$ (la réponse $h(t)$ comprend en fait la convolution du filtre d'émission, du filtre de réception et du canal de propagation). On sait que compte tenu de la structure de la matrice $\mathbf{H}$, on peut réécrire $\mathbf{y}$ sous la forme $\mathbf{y} = \mathbf{Sh}$ où $\mathbf{S}$ est une matrice dont les éléments sont connus et $\mathbf{h} = [h(1),..., h(L)]^T$ avec

$$h(n) = h(t)\big|_{t=nT_c}.$$

Il est alors possible d'estimer $\mathbf{h}$ connaissant $\mathbf{S}$ et $\mathbf{y}$, par exemple en utilisant un critère des moindres carrés dont la solution classique est $\mathbf{h} = \mathbf{S}^T(\mathbf{S}^T\mathbf{S})^{-1}\mathbf{y}$.

**Égalisation de la voie descendante**

Dans la voie descendante, le signal reçu par l'utilisateur u après échantillonnage provenant de la station centrale est de la forme :

$$y_{u,PA} = H_{u,PA}s$$

avec

$$\mathbf{s} = \sum_{p=1}^{N_u} \mathbf{C}_p \mathbf{s}_p$$

où $H_{u,PA}$ est la matrice de convolution du canal de propagation entre la station centrale et l'utilisateur $u$, $\mathbf{C}_p$ et $S_P$ sont respectivement la matrice de codage du code d'étalement et la séquence de symboles de l'utilisateur $p$. Les échantillons de la réponse impulsionnelle du canal ayant été estimés, l'égalisation consiste à annuler tout ou partie de l'effet du canal afin de récupérer les symboles transmis. Un grand nombre d'égaliseurs existant dans la littérature sont applicables qu'ils soient linéaires (EQMM, Zero Forcing (ZF), Rake, Filtre Adapté, ...) ou non linéaires (Viterbi, DFE, ...). Par exemple dans le cas d'un égaliseur linéaire à critère ZF, la matrice de l'égaliseur s'écrit : $\mathbf{G}_{ZF} = (\mathbf{H}_{u,PA}^T \mathbf{H}_{u,PA})^{-1}\mathbf{H}_{u,PA}^T$ et la sortie de l'égaliseur vaut:

$$\mathbf{G}_{ZF}\mathbf{y}_{u,PA} = \sum_{p=1}^{N_u} \mathbf{C}_p \mathbf{s}_p .$$

Compte tenu de l'orthogonalité des codes d'étalement (due à l'entrelacement temporel des utilisateurs), les symboles décodés correspondant à l'utilisateur $u$ sont obtenus en sélectionnant les sorties correspondantes, ou de manière équivalente en appliquant la matrice $\mathbf{C}_u$ à la sortie de l'égaliseur : $\mathbf{s}_u = \mathbf{C}_u^T \mathbf{G}_{ZF}\mathbf{y}_{u,PA.}$

**Égalisation de la voie montante**

La voie montante se distingue de la voie descendante par le fait que la station centrale voit les différents utilisateurs au travers de canaux différents. Le signal reçu par la station centrale provenant de l'utilisateur u s'écrivant :

$$y_{PA,u} = H_{PA,u}C_u s_u$$

le signal composite reçu au niveau de la station centrale et provenant de tous les utilisateurs s'écrit alors :

$$\mathbf{y}_{PA} = \sum_{p=1}^{N_u} \mathbf{H}_{PA,p} \mathbf{C}_p \mathbf{s}_p$$

L'estimation des canaux des voies montantes (phase CHAC) permet de construire les matrices $\mathbf{H}_{PA,u}$. On peut réécrire le signal reçu sous la forme

$$y_{PA} = H_{PA}s$$

avec $\mathbf{H}_{PA} = [\mathbf{H}_{PA,1}\mathbf{C}_1,...\mathbf{H}_{PA,N_u}\mathbf{C}_{N_u}]$ et $\mathbf{s} = [\mathbf{s}_1^T,...,\mathbf{s}_{N_u}^T]^T$. On est alors ramené au même problème que dans le cas de la voie descendante pour laquelle on peut appliquer l'éventail des égaliseurs disponibles dans la littérature listés précédemment.

**Suivi de l'évolution des paramètres du canal de transmission**

Le suivi est par exemple effectué périodiquement dans le CHAC suite à la désignation du terminal concerné par le point d'accès (la station maître) dans le FCH. Il est nécessaire pour prendre en compte le mouvement de l'usager ou pour compenser les variations de son environnement (autres personnes qui bougent, voitures, ...)

**Modes complémentaires de fonctionnement**

**Mode optimisation du débit**

Pour de raisons de montée en débit, la station centrale peut être amenée à n'autoriser que les stations mobiles qui présentent une réponse impulsionnelle, du canal de transmission entre ces stations et elle-même, particulièrement courte. L'écart temporel entre les impulsions émises par une station mobile peut donc être réduite évitant ainsi tout traitement d'égalisation par la station centrale. Ce mode est utile quand le nombre de stations mobiles rattachées à la station centrale est grand et les réponses impulsionnelles associées sont particulièrement complexes.

**Mode optimisation du débit par limitation de la distance**

La station centrale peut interdire l'accès à une station usager parce que :

■ la distance est trop grande et donc susceptible d'apporter des réponses impulsionnelles trop grandes,
■ la réponse impulsionnelle détectée est trop grande et peut ralentir l'accès à haut débit.

La station centrale peut donc être amenée à indiquer la longueur d'intégration à utiliser, à savoir le nombre d'impulsions par symbole (en fonction du bilan de liaison et donc de la distance). On peut ainsi imbriquer différents utilisateurs avec différents paramètres d'intégration (différents débits, différentes priorités, ...).

**Optimisation du spectre émis**

Le spectre émis par la base, dans l'hypothèse d'impulsions transmises régulièrement avec une récurrence T, est composé de raies espacées de 1/T avec une enveloppe en sin x/x. Dans les mêmes conditions de récurrence, le spectre est identique pour les stations.

Il est donc ainsi possible d'éviter certaines bandes de fréquences trop critiques ou trop vulnérables, en utilisant une valeur de T adaptée. Ainsi si l'on veut éviter les bandes de fréquences GPS, à 1 227.6 et 1 575.42 MHz, T peut être calculé de telle façon que :

- D'une part les raies en k/T évitent ces fréquences,
- D'autre part l'intervalle de fréquence en 1/T soit supérieur aux bandes à éviter.

Par exemple, avec T=10 ns, 1/T = 100 MHz et les raies les plus proches sont centrées sur 1.2, 1.3 GHz et 1.5, 1.6 GHz.

L'invention s'applique notamment quelque soit le choix de la modulation pour les impulsions (PPM, bipolaire, ..) ainsi que de l'utilisation ou non d'un facteur d'intégration quelconque. Il est aussi possible de superposer un code commun à chaque utilisateur d'un point central si l'on souhaite séparer deux réseau adjacents, comme dans une structure de type cellulaire.

**Revendications**

1. Procédé de communication dans un réseau supportant un protocole de transmissions par impulsions entre une station maître et une ou plusieurs stations utilisateurs **caractérisé en ce qu'**il comporte au moins les étapes suivantes :

    - synchroniser la réponse impulsionnelle de la station maître reçue par les stations utilisateurs,
    - acquérir les réponses impulsionnelles des stations utilisateurs reçues par la station maître,
    - émettre des impulsions rapprochées de la station maître vers les différentes stations utilisateurs, et des différents utilisateurs vers la station maître.
    - égaliser les impulsions à la réception pour chaque station utilisateur et pour la station maître.

2. Procédé selon la revendication 1 **caractérisé en ce qu'**il comporte au moins une étape d'entrelacement des signaux échangés des stations utilisateurs vers la station maître.

3. Procédé selon la revendication 1 **caractérisé en ce qu'**il comporte au moins une étape d'entrelacement des signaux échangés de la station maître vers les stations utilisateurs.

4. Procédé selon l'une des revendications 1 à 3 **caractérisé en ce que** l'étape de synchronisation comporte une étape de mesure de la distance entre la station centrale et un utilisateur permettant de déterminer le décalage temporel à appliquer lors de l'émission d'une station utilisateur vers la station maître.

5. Procédé selon la revendication 1 **caractérisé en ce que** l'étape d'égalisation comporte au moins une étape d'estimation des paramètres du canal de propagation et une étape d'égalisation avec échantillonnage au rythme chip, cadence des impulsions associées.

6. Procédé selon la revendication 5 **caractérisé en ce qu'**il comporte une étape d'estimation des paramètres du canal de propagation comportant les étapes suivantes :

    - Une station envoie une séquence connue de N symboles $\mathbf{s}_{ref} = [s_{ref}(1), ..., s_{ref}(N)]^T$ et le signal reçu par une seconde station après échantillonnage s'exprime comme :

    - $\mathbf{y} = \mathbf{HC}\mathbf{s}_{ref}$
    - avec $\mathbf{y} = [y(1), ..., y(M)]^T$ où $\mathbf{C}$ est la matrice de codage du code d'étalement temporel utilisé par les différents utilisateurs et $\mathbf{H}$ est la matrice composée des valeurs de la réponse impulsionnelle $h(t)$ du canal, échantillonnée au rythme $T_c$.
    - On réécrit y sous la forme $\mathbf{y} = \mathbf{Sh}$ où $\mathbf{S}$ est une matrice dont les éléments sont connus et $\mathbf{h} = [h(1),..., h(L)]^T$ avec

$$h(n) = h(t)\big|_{t=nT_c}$$

    - On estime h connaissant $\mathbf{S}$ et $\mathbf{y}$, en utilisant une méthode d'égalisation.

7. Procédé selon la revendication 5 **caractérisé en ce que** l'égalisation de la voie descendante utilise un signal reçu par la station utilisateur et provenant de la station maître, le signal s'exprimant sous la forme :

$$y_{u,PA} = H_{u,PA}s$$

avec

$$\mathbf{s} = \sum_{p=1}^{N_u} \mathbf{C}_p \mathbf{s}_p$$

où $H_{u,PA}$ est la matrice de convolution du canal de propagation entre la station maître et l'utilisateur $u$, $\mathbf{C}_p$ et $\mathbf{s}_p$ sont respectivement la matrice de codage du code d'étalement et la séquence de symboles de l'utilisateur $p$

on annule tout ou partie de l'effet du canal afin de récupérer les symboles transmis en utilisant un égaliseur.

**8.** Procédé selon la revendication 5 **caractérisé en ce que** l'étape d'égalisation de la voie montante utilise un signal reçu par la station maître et provenant d'un utilisateur, le signal étant de la forme :

$$y_{PA,u} = H_{PA,u}C_u s_u$$

le signal composite reçu au niveau de la station maître et provenant de tous les utilisateurs s'écrit alors :

$$\mathbf{y}_{PA} = \sum_{p=1}^{N_u} \mathbf{H}_{PA,p}\mathbf{C}_p\mathbf{s}_p$$

on détermine les matrices $\mathbf{H}_{PA,u}$ au moyen de l'estimation des canaux des voies montantes, on réécrit le signal reçu sous la forme

$$y_{PA} = H_{PA}s$$

avec $\mathbf{H}_{PA} = [\mathbf{H}_{PA,1}\mathbf{C}_1,...,\mathbf{H}_{PA,N_u}\mathbf{C}_{N_u}]$ et $\mathbf{s} = [\mathbf{s}_1^T,...,\mathbf{s}_{N_u}^T]^T$

**9.** Procédé selon la revendication 1 **caractérisé en ce que** lors d'une communication en voie descendante, on réserve au moins le premier train d'impulsions pour conserver la synchronisation à la station maître.

**10.** Procédé selon l'une des revendications 1 à 9 **caractérisé en ce que** l'étape d'entrelacement utilise un code orthogonal.

**11.** Système de communication dans un réseau supportant un protocole de transmissions par impulsions entre une station maître et une ou plusieurs stations utilisateurs **caractérisé en ce que** la station maître et les stations utilisateurs sont équipées de processeurs adaptés à

• synchroniser la réponse impulsionnelle de la station maître reçue par les stations utilisateurs,
• acquérir les réponses impulsionnelles des stations utilisateurs reçues par la station maître,

• émettre des impulsions rapprochées de la station maître vers les différentes stations utilisateurs, et des différents utilisateurs vers la station maître,
• égaliser les impulsions à la réception pour chaque station utilisateur et pour la station maître.

**12.** Utilisation du procédé selon l'une des revendications 1 à 10 et du système selon la revendication 11 dans un réseau centralisé.

**13.** Utilisation du procédé selon l'une des revendications 1 à 10 et du système selon la revendication 11 dans un réseau supportant une couche de transmission UWB.

| P1 | BCH | P2 | FCH | ACH | P3 | Paquets voie descendante | P4 | Paquets voie montante | P5 | RCH |
|----|-----|----|-----|-----|----|--------------------------|----|-----------------------|----|----|

## FIG.1

EP 1 460 773 A1

| P1 | BCH | FCH | ACH | Voie descendante | CHAC | Tg | Voies montantes | RCH |
|----|-----|-----|-----|------------------|------|----|----|----|

## FIG.3

```
┌─────────────────┐
│ Contrôle timing │
│ chaîne émission │
└─────────────────┘

┌──────────────────┐   ┌─────────────┐   ┌──────────────┐   ┌──────────┐   ┌──────────────┐   ┌─────────────┐
│   Signalisation  │   │ Préparation │   │  Données à   │   │  Codage  │   │  Codage et   │   │  Générateur  │
│    Pt central    │   │  données    │   │  émettre     │   │  canal   │   │  modulation  │   │  impulsions  │
│ Allocation des   │   └─────────────┘   └──────────────┘   └──────────┘   └──────────────┘   └─────────────┘
│     slots        │
│ Optimisation     │
│     débit        │   ┌─────────────────────────┐   ┌─────────┐   ┌────────────────┐   ┌────────────────┐
│                  │   │    Synchronisation      │   │ Horloge │   │  Commutateur   │   │     Filtre     │
│  Mémorisation    │   │  Estimation de canal    │   └─────────┘   │   In / Out     │   │  Passe-bande   │
│   requêtes       │   └─────────────────────────┘               └────────────────┘   └────────────────┘
│  Exploitation    │
│   données        │   ┌─────────┐   ┌──────────┐   ┌──────────┐   ┌──────────────┐   ┌─────┐
└──────────────────┘   │ Gestion │   │ Données  │   │ Décodage │   │ Démodulation │   │ CAN │   LNA
                       │ données │   │ reçues   │   │  canal   │   └──────────────┘   └─────┘
                       └─────────┘   └──────────┘   └──────────┘

┌─────────────────┐
│ Contrôle timing │
│ chaîne réception│
└─────────────────┘
```

**FIG.2**

EP 1 460 773 A1

FIG.2

Station
usager 2

Station
centrale

Station
usager 1

Station
usager 3

10 ns

100 ns

# FIG.4

U1

U3

U2

U4

Train composite

Trains lus par chaque terminal

32 µs

U1
U2
U3
U4

1024 µs

**FIG.5**

$c^1=[1\ 2\ 3]$    $c^2=[2\ 3\ 1]$    $c^3=[3\ 1\ 2]$

**FIG.6**

**FIG.7**

Durée trame

PA: Phase descendante | Q | CHAC | R | Tg | phase montante | RCH

Délai de propagation

M1: Phase descendante | Q | R | Phase montante | RCH

Avance 1

M2: Phase descendante | Q | CHAC | Phase montante | RCH

Avance 2

d2

d1

M2

Station centrale

d3

M1

M3

**FIG.8**

EP 1 460 773 A1

E         R

$\}$ Temps de propagation $T_p$

Séquence d'interrogation de durée $T_i$

$T_{total}=2*(T_i+T_p) + T_r$

$\}$Temps de retournement et de traitement $T_r$

## FIG.9

Temps de trajet aller

Temps de trajet retour

Identification de la réponse du canal + calcul du temps de trajet

Station Centrale

Identification de la réponse du canal

Réponse reçue par la station centrale

Mobile

Signal reçu par le mobile

Réponse envoyée

## FIG.10

**FIG.11**

**Office européen des brevets**

**RAPPORT DE RECHERCHE EUROPEENNE**

Numéro de la demande

EP 04 10 1036

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 02/052740 A (RHODES ANDREW MICHAEL ;SCIENT GENERICS LTD (GB); EDGE GORDON MALCO) 4 juillet 2002 (2002-07-04) * page 6, ligne 15 - page 15, ligne 2 * --- | 1,11 | H04B1/69 |
| A | WO 03/009608 A (MOHR WERNER ;MOEHRMANN KARL-HEINZ (DE); HULBERT PETER ANTHONY (GB)) 30 janvier 2003 (2003-01-30) * page 7, ligne 11 - page 9, ligne 14 * --- | 1,11 | |
| A | Q. LI ET AL.: "Multiuser detection for DS-CDMA UWB in the home environment" IEEE JOURNAL ON SELECTED AREAS IN COMMUNICATIONS, vol. 20, no. 9, décembre 2002 (2002-12), pages 1701-1711, XP002260739 * alinéa [00II] - alinéa [0III]; figure 3 * ----- | 1,11 | |

**DOMAINES TECHNIQUES RECHERCHES (Int.Cl.7)**

H04B

Le présent rapport a été établi pour toutes les revendications

| Lieu de la recherche | Date d'achèvement de la recherche | Examinateur |
|---|---|---|
| BERLIN | 4 juin 2004 | Augarde, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03 82 (P04C02)

**ANNEXE AU RAPPORT DE RECHERCHE EUROPEENNE**
**RELATIF A LA DEMANDE DE BREVET EUROPEEN NO.**                    EP 04 10 1036

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-06-2004

| Document brevet cité au rapport de recherche | | Date de publication | Membre(s) de la famille de brevet(s) | | Date de publication |
|---|---|---|---|---|---|
| WO 02052740 | A | 04-07-2002 | WO | 02052740 A1 | 04-07-2002 |
| WO 03009608 | A | 30-01-2003 | WO | 03009608 A2 | 30-01-2003 |

EPO FORM P0460

Pour tout renseignement concernant cette annexe : voir Journal Officiel de l'Office européen des brevets, No.12/82